# FASCICULE DE BREVET EUROPEEN

(11) **EP 3 212 951 B1**
(45) Date de publication et mention de la délivrance du brevet: **26.02.2020**
(21) Numéro de dépôt: 15797137.5
(22) Date de dépôt: 29.10.2015
(51) Int. Cl.: F16D 13/64

(54) **DISQUE D'EMBRAYAGE POUR EMBRAYAGE A FRICTION**
KUPPLUNGSSCHEIBE FÜR EINE REIBUNGSKUPPLUNG
CLUTCH DISC FOR A FRICTION CLUTCH

(30) Priorité: 30.10.2014 FR 1460441
(43) Date de publication de la demande: 06.09.2017
(73) Titulaire: Valeo Matériaux de Friction, 87020 Limoges (FR)
(72) Inventeur: CROSLAND, Gérard, F-23300 La Souterraine (FR); ALIX, Isabelle, F-87290 Chateauponsac (FR); GUYOT, Daniel, F-87000 Limoges (FR); PINEDA, Philippe, F-19100 Brive la Gaillarde (FR)
(74) Mandataire: Cardon, Nicolas
(86) Numéro de dépôt international: PCT/FR2015/052920
(87) Numéro de publication internationale: WO 2016/066969

(56) Documents cités:
- WO-A1-01/86162
- DE-A1- 19 505 620
- DE-A1-102012 220 528
- FR-A1- 2 392 284
- GB-A- 2 371 097
- JP-A- 2004 257 428
- US-A- 2 630 199

## Description

La présente invention concerne un disque d'embrayage pour embrayage à friction.

L'invention s'applique notamment pour une transmission de véhicule automobile.

Il est connu, par exemple de la demande WO 2008/053125 ou JP 2004 257428, d'utiliser un disque d'embrayage pour embrayage à friction, comprenant :
- un moyeu s'étendant selon un axe longitudinal,
- un flasque couplé au moyeu,
- un support rigidement couplé au flasque et s'étendant radialement au-delà du flasque,
- une garniture de friction solidaire du support, et
- une pièce intercalaire disposée axialement entre le support et la garniture de friction.

La pièce intercalaire permet d'éviter que des zones de progressivité dans le disque viennent dégrader la garniture au fur et à mesure de l'utilisation du disque. Lorsque la pièce intercalaire est solidaire de la garniture de friction, cette pièce intercalaire peut fournir une résistance mécanique à l'éclatement.

Dans ce disque, le support présente une portion dans laquelle il n'est ni au contact direct du flasque, ni au contact direct de la pièce intercalaire. Il est souhaitable que cette portion du support présente une certaine flexibilité axiale pour permettre un positionnement correct du disque d'embrayage par rapport aux autres composants de l'embrayage dans les diverses configurations de fonctionnement de l'embrayage. Il existe ainsi un besoin pour disposer d'un disque d'embrayage avec un support présentant cette flexibilité axiale, et qui soit relativement simple et peu coûteux à réaliser.

L'invention a pour but de répondre à ce besoin et elle y parvient, selon l'un de ses aspects, à l'aide d'un disque d'embrayage pour embrayage à friction, comprenant :
- un moyeu s'étendant selon un axe longitudinal,
- un flasque couplé au moyeu,
- un support rigidement couplé au flasque et s'étendant radialement au-delà du flasque,
- une garniture de friction solidaire du support, et
- une pièce intercalaire disposée axialement entre le support et la garniture de friction,
   la partie du bord radialement intérieur de la pièce intercalaire en contact avec le support étant à une distance de l'axe du moyeu supérieure à la distance entre ledit axe et le bord radialement intérieur de la garniture de friction.

Autrement dit, selon l'invention, le bord radialement intérieur de la garniture de friction et le bord radialement intérieur de la pièce intercalaire ne sont pas disposés dans le prolongement l'un de l'autre lorsque l'on se déplace parallèlement à l'axe du moyeu.

Grâce aux distances mentionnées ci-dessus, on accroît la dimension radiale de la portion du support qui est radialement en-deça de la pièce intercalaire et radialement au-delà du flasque et qui n'est en contact avec aucune de ces deux pièces. On peut ainsi réduire les problèmes de broutement d'embrayage, notamment avec des boîtes robotisées, et les problèmes de crissement d'embrayage.

Au sens de la présente demande, on désigne par « rayon d'une pièce » la distance radiale minimale entre cette pièce et l'axe du moyeu.

Toujours au sens de la présente demande, « axialement » signifie « parallèlement à l'axe du moyeu », « radialement » signifie « le long d'un axe appartenant à un plan perpendiculaire à l'axe du moyeu et coupant cet axe», et « angulairement » ou « circonférentiellement » signifie « autour de l'axe du moyeu ».

On peut par exemple, à rayon intérieur de la garniture de friction constant par rapport à l'art antérieur, augmenter la longueur de la dite portion du support radialement disposée entre le flasque et la pièce intercalaire, et ainsi augmenter la flexibilité de cette portion. Le rayon intérieur de la garniture de friction n'étant pas modifié, les surfaces de friction aptes à venir en contact avec le plateau de pression ou de réaction de l'embrayage ne sont alors pas modifiées, de sorte que les performances de l'embrayage en termes de transmission de couple restent les mêmes.

En variante, le rayon intérieur de la garniture de friction peut être légèrement augmenté par rapport à l'art antérieur et cette légère augmentation se traduit par une augmentation plus conséquente du rayon au niveau de la pièce intercalaire, et donc par une flexibilité axiale accrue pour la portion du support radialement disposée entre le flasque et la pièce intercalaire.

Selon l'invention, on utilise la pièce intercalaire pour créer un décalage radial entre la partie au contact du support du bord radialement intérieur de l'ensemble formé par la pièce intercalaire et la garniture, et le bord radialement intérieur de la garniture de friction.

La description divulgue un premier exemple non couvert par l'invention mais utile à la compréhension de l'invention dans lequel la pièce intercalaire a un bord radialement intérieur parallèle à l'axe de rotation, ce bord radialement intérieur étant disposé radialement au-delà du bord radialement intérieur de la garniture de friction. Ce bord radialement intérieur définit par exemple une surface cylindrique tout autour de l'axe de rotation du moyeu.

Selon ce premier exemple, la garniture de friction peut également avoir un bord radialement intérieur parallèle à l'axe de rotation, ce bord radialement intérieur étant disposé radialement en-deça du bord radialement intérieur de la pièce intercalaire, c'est-à-dire que le bord radialement intérieur de la garniture de friction est plus proche de l'axe de rotation du moyeu que ne l'est le bord radialement intérieur de la pièce intercalaire.

Selon ce premier exemple, lesdits bords peuvent chacun définir une surface cylindre de rayons différents, et le décalage entre ces rayons permet d'augmenter la longueur de la portion du support radialement au-delà du flasque et radialement en deça de la pièce intercalaire et n'étant pas en contact avec ces derniers. Le décalage entre ces rayons peut être inférieur à 20% de la dimension radiale de la garniture de friction, cette dimension radiale de la garniture de friction étant la différence entre le rayon extérieur et le rayon intérieur de la garniture de friction. Ce décalage entre les rayons est par exemple compris entre 1% et 15% de la dimension radiale de la garniture de friction.

La dimension axiale de la pièce intercalaire peut être comprise entre 5 et 80%, notamment entre 5 et 50% de la dimension axiale de l'ensemble formé par la pièce intercalaire et la garniture de friction.

Selon une variante de ce premier exemple, la garniture de friction peut présenter un bord radialement intérieur dont au moins une portion se rapproche de l'axe de rotation du moyeu lorsque l'on se déplace le long de ladite portion depuis la pièce intercalaire, cette portion étant notamment chanfreinée.

Selon l'invention, la pièce intercalaire a un bord radialement intérieur dont au moins une portion se rapproche de l'axe de rotation lorsque l'on se déplace le long de ladite portion depuis le support vers la garniture de friction. Cette portion du bord radialement intérieur de la pièce intercalaire peut définir un chanfrein. En variante, il peut s'agir d'une portion incurvée, par exemple convexe ou concave ou d'une portion de toute autre forme.

Cette portion peut être ménagée sur la totalité du bord radialement intérieur de la pièce intercalaire. En variante, cette portion peut présenter une dimension axiale inférieure à la dimension axiale du bord radialement intérieur de la pièce intercalaire. Dans ce cas, cette portion peut être la portion du bord radialement intérieur de la pièce intercalaire qui est en contact avec le support. Cette portion présente par exemple une dimension axiale comprise entre 20% et 100% de la dimension axiale du bord radialement intérieur de la pièce intercalaire.

Lorsque la portion définit un chanfrein, l'angle de ce dernier, mesuré par rapport à l'axe de rotation du moyeu peut être compris entre 15° et 85°, étant notamment compris entre 55° et 85°.

Toujours selon ce deuxième exemple de mise en œuvre de l'invention, la garniture de friction peut avoir un bord radialement intérieur dont au moins une portion se rapproche de l'axe de rotation lorsque l'on se déplace le long de ladite portion depuis la pièce intercalaire. Cette portion du bord radialement intérieur de la garniture de friction définit par exemple un chanfrein. La portion peut être ménagée sur la totalité du bord radialement intérieur de la garniture de friction. En variante, cette portion peut présenter une dimension axiale inférieure à la dimension axiale du bord radialement intérieur de la garniture de friction. Dans ce cas, cette portion peut être la portion du bord radialement intérieur de la garniture de friction la plus proche de la pièce intercalaire, de manière à ne pas modifier le bord radialement intérieur de la surface de friction définie par la garniture de friction. Cette portion présente par exemple une dimension axiale comprise entre 20% et 100% de la dimension axiale du bord radialement intérieur de la garniture de friction.

Lorsque cette portion du bord radialement intérieur de la garniture de friction définit un chanfrein, l'angle de ce dernier, mesuré par rapport à l'axe de rotation du moyeu peut être compris entre 15° et 85°, notamment entre 55° et 85°. L'angle du chanfrein défini par cette portion du bord radialement intérieur de la garniture de friction peut être le même que l'angle du chanfrein défini par la portion ou par la totalité du bord radialement intérieur de la pièce intercalaire et ces deux chanfreins peuvent, le cas échéant, former un seul et même chanfrein.

Dans un tel cas, un seul et même chanfrein peut être défini et la projection axiale de ce chanfrein peut être comprise entre 5 et 80 %, notamment entre 5% et 50% de la dimension axiale de l'ensemble formé par la pièce intercalaire et la garniture de friction.

Selon ce deuxième exemple de mise en œuvre de l'invention, le ou les chanfreins mentionnés ci-dessus, en créant un décalage radial entre la partie en contact avec le support du bord radialement intérieur de la pièce intercalaire et le bord radialement intérieur de la garniture de friction, permettent d'augmenter la longueur de la portion du support radialement au-delà du flasque et radialement en deça de la pièce intercalaire et n'étant pas en contact avec ces derniers.

Selon ce deuxième exemple de mise en œuvre de l'invention, le ou les chanfreins ménagés dans l'ensemble formé par la pièce intercalaire et la garniture de friction peuvent présenter une dimension radiale inférieure à 20% de la dimension radiale de la garniture de friction, cette dernière étant égale à la différence entre le rayon radialement extérieur de la garniture de friction et le rayon radialement intérieur de la garniture de friction. La dimension radiale de ce ou ces chanfreins est par exemple comprise entre 1% et 15% de la dimension radiale de la garniture de friction.

Selon une variante de ce deuxième exemple de mise en œuvre de l'invention, la garniture de friction peut avoir un bord radialement intérieur parallèle à l'axe de rotation.

Dans tout ce qui précède, et notamment selon le premier exemple divulgué par la présente description, la garniture de friction et la pièce intercalaire peuvent être solidarisées par collage. La pièce intercalaire est par exemple une tôle en acier.

En variante, dans tout ce qui précède, et notamment selon le deuxième exemple de mise en œuvre de l'invention, la garniture de friction est surmoulée sur la pièce intercalaire. Cette dernière est par exemple une tôle en acier.

Selon le premier exemple divulgué par la présente description ou le deuxième exemple de mise en œuvre de l'invention mentionnés ci-dessus, le flasque peut avoir un bord radialement extérieur dont au moins une portion s'éloigne de l'axe de rotation lorsque l'on se déplace le long de ladite portion depuis le support, cette portion définissant notamment un chanfrein. De cette manière, la longueur de la portion du support radialement au-delà du flasque et radialement en deça de la pièce intercalaire et non en contact avec ces derniers est d'une part augmentée grâce au décalage radial obtenu entre le bord radialement intérieur de la garniture de friction et le bord radialement intérieur de la partie de la pièce intercalaire en contact avec le support, mais également grâce à cette configuration du bord radialement extérieur du flasque. On peut ainsi accroître encore la flexibilité axiale de cette portion du support.

Dans tout ce qui précède, la longueur gagnée pour cette portion du support radialement au-delà du flasque et radialement en deça de la garniture peut être comprise entre 110% et 150% de la dimension radiale égale à la différence entre le rayon intérieur de la garniture de friction et la dimension radiale extérieure maximale du flasque. Lorsque le bord radialement extérieur du flasque est dépourvu de partie s'éloignant de l'axe de rotation du moyeu, cette dimension radiale extérieure maximale du flasque est égale au rayon extérieur du flasque.

La garniture de friction peut être composée, en totalité ou en partie, de matériau de friction à matrice organique à structure fils continus, notamment lorsque la garniture de friction et le support sont solidarisées par collage.

En variante, la garniture de friction peut être composée, en totalité ou en partie, de matériau de friction à matrice organique contenant des fibres courtes, notamment lorsque la garniture de friction est surmoulée sur le support.

Dans tout ce qui précède, le support peut présenter des zones de progressivité configurées pour être élastiquement déformables axialement. Ces zones de progressivité peuvent comprendre au moins une ailette permettant cette déformation élastique axiale. La ou les ailettes peuvent être découpées et formées dans le support. En variante, la ou les ailettes sont rapportées sur le support, ce dernier ayant été préalablement découpé.

Avec de telles zones de progressivité, l'invention peut permettre de réduire les contraintes à la rupture du disque qui peut être qualifié de « progressif ».

Deux garnitures de friction peuvent être solidaires du support, chaque garniture de friction s'étendant alors axialement d'un côté du support. Dans ce cas, les ailettes sont axialement disposées entre les deux garnitures de friction.

Lorsque deux garnitures de friction s'étendant chacune axialement d'un côté du support sont prévues, seule l'une de ces garnitures et/ou seule l'une des pièces intercalaires peut présenter un bord radialement intérieur tel que mentionné ci-dessus. En variante, chacune de ces deux garnitures de friction et/ou chaque pièce intercalaire peut présenter un tel bord radialement intérieur.

Le flasque peut être solidaire en rotation du moyeu et le disque peut alors être dépourvu d'amortisseur de torsion. Dans un tel cas, les garnitures de friction sont solidaires en rotation du moyeu, voire rigidement couplées avec le moyeu. Le disque peut alors être associé à un amortisseur de torsion « externe » tel qu'un double volant amortisseur. En variante, le flasque peut former le flasque d'entrée d'un amortisseur de torsion du disque, le disque comprenant en outre :
- un flasque de sortie de cet amortisseur de torsion, solidaire en rotation du moyeu, et
- au moins un organe de rappel élastique générant un effort s'opposant à la rotation du flasque d'entrée de l'amortisseur par rapport au flasque de sortie de l'amortisseur.

Selon cette variante, le flasque d'entrée peut être l'un d'une rondelle de guidage et d'un voile de l'amortisseur.

Le disque comprend par exemple deux rondelles de guidage entre lesquelles est disposé axialement le voile.

Le flasque d'entrée peut être l'une des rondelles de guidage, auquel cas le voile définit le flasque de sortie solidaire en rotation du moyeu.

En variante, le flasque d'entrée est le voile, auquel cas le flasque de sortie solidaire en rotation du moyeu est formé par l'une des rondelles de guidage.

L'invention pourra être mieux comprise à la lecture de la description qui va suivre d'un exemple non limitatif de mise en œuvre de celle-ci et à l'examen du dessin annexé sur lequel :
- la figure 1 représente de façon schématique un disque de friction selon l'invention,
- la figure 2 représente de façon schématique une partie d'un disque de friction selon un premier exemple non couvert par l'invention mais utile à la compréhension de l'invention,
- la figure 3 est un détail de la figure 2,
- la figure 4 représente de façon schématique une partie d'un disque de friction selon un deuxième exemple de mise en œuvre de l'invention, et
- la figure 5 est un détail de la figure 4.

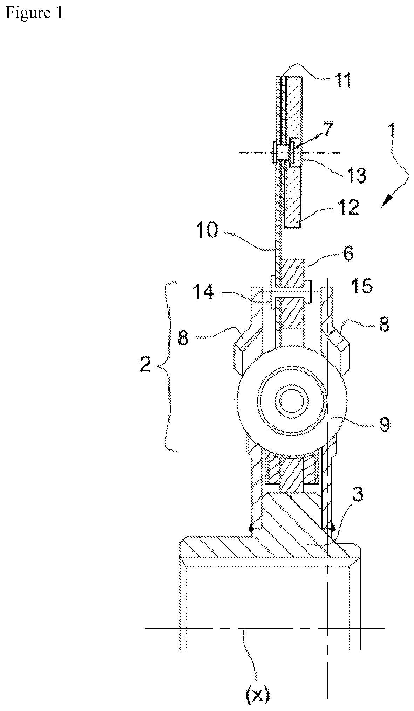

On a représenté à la figure 1 un disque de friction 1 selon l'invention. Dans l'exemple représenté, ce disque 1 comprend un amortisseur de torsion 2 selon un exemple de mise en œuvre de l'invention. Ce disque de friction 1 comprend un moyeu 3 s'étendant selon un axe longitudinal X autour duquel il peut tourner. Le moyeu 3 est par exemple monté sur une portion d'un arbre d'entrée non représenté d'une boîte de vitesses et solidaire en rotation de cet arbre.

De façon connue, l'amortisseur 2 comprend un flasque d'entrée 6 et un flasque de sortie 8 entre lesquels est interposé un organe de rappel élastique 9, ce dernier permettant un déplacement en rotation limité entre les flasques d'entrée 6 et de sortie 8. Dans l'exemple décrit, le flasque d'entrée 6 est un voile rigidement couplé à un support 10 solidaire de garnitures de friction 12. A la figure 1, seule une garniture de friction 12 est représentée, une autre garniture de friction étant également portée par le support 10 et agencée de l'autre côté du support 10 par rapport à la garniture 12 représentée. Comme on peut le voir, entre la garniture de friction 12 et le support 10, est interposée axialement une pièce intercalaire 11. Le couplage rigide entre le voile 6 et le support 10 est par exemple effectué à l'aide de rivets 14.

Comme on peut le voir sur la figure 1, le flasque de sortie 8 est ici formé par une rondelle de guidage axialement décalée par rapport à une autre rondelle de guidage, le voile 6 étant disposé axialement entre ces rondelles de guidage 8. Les rondelles de guidage 8 sont solidaires et fixées en rotation sur le moyeu 3, par exemple au moyen de cannelures.

Dans l'exemple considéré, l'amortisseur 2 comprend une pluralité d'organes de rappel élastique 9 se succédant angulairement, chaque organe de rappel élastique 9 étant à la fois reçu dans cet exemple:
- dans une fenêtre ménagée dans le voile 6,
- dans une fenêtre ménagée dans le support 10, et
- dans une fenêtre ménagée dans chaque rondelle de guidage 8.Comme décrit à la figure 1, la garniture 12 comprend un trou 13 avec une partie suffisamment large pour recevoir une tête de rivet 7 et une partie plus étroite pour permettre le déplacement du corps de rivet sans autoriser le passage de la tête de rivet 7. En fond de la partie la plus large se trouve une face de lamage sur laquelle peut venir s'appuyer la tête de rivet 7. La pièce intercalaire 6 et le support 10 comprennent chacun un trou. Chaque trou est axialement en regard des autres, et le corps du rivet 7 les traverse afin de solidariser en rotation la garniture de friction 12 et le support 10.

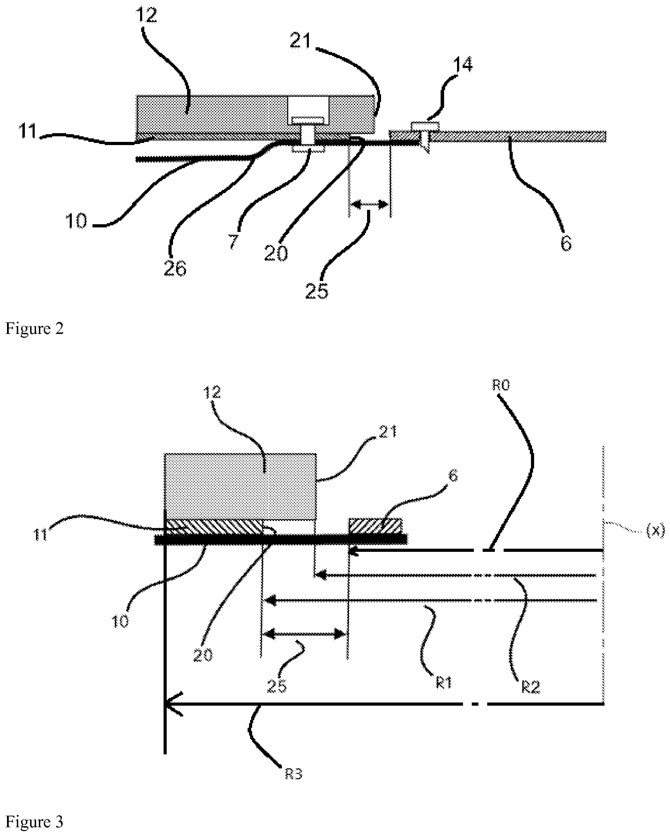

On a représenté de façon schématique à la figure 2 une partie du disque de friction 1 selon un premier exemple . La figure 3 représente, en détail, une vue schématique du même disque de friction 1 représenté à la figure 2.Les figures 2 et 3 sont des vues en coupes réalisées selon un plan contenant l'axe de rotation X.

Dans les exemples considérés, le voile 6 présente un bord radialement extérieur 19 parallèle à l'axe de rotation X, ce bord radialement extérieur 19 définissant une surface cylindrique de rayon R0 tout autour de l'axe de rotation X du moyeu 3.

Comme on peut le voir sur la figure 2, la pièce intercalaire 11 a un bord radialement intérieur 20 parallèle à l'axe de rotation X et ce bord radialement intérieur 20 définit une surface cylindrique de rayon R1 tout autour de l'axe de rotation X du moyeu 3.

Comme on peut également le voir, la garniture de friction 12 a un bord radialement intérieur 21 parallèle à l'axe de rotation. Ce bord radialement intérieur 21 définit une surface cylindrique de rayon R2 tout autour de l'axe de rotation X du moyeu 3. La garniture de friction 12 a également un bord radialement extérieur parallèle à l'axe de rotation définissant une surface cylindrique de rayon R3 tout autour de l'axe de rotation X du moyeu 3.

Comme on peut le voir, les surfaces définies respectivement par les bords 20 et 21 sont ici radialement décalées. Le décalage entre les rayons R1 et R2 permet d'augmenter la longueur de la portion 25 du support 10 radialement au-delà du flasque 6 et radialement en deça de la pièce intercalaire 11 et sans contact avec les pièces 6 et 10. Le décalage entre ces rayons R1 et R2 est ici compris entre 1% et 15 % de la dimension radiale de la garniture de friction 12, cette dimension radiale étant égale à la différence entre les rayons R3 et R2.

Dans l'exemple de mise en œuvre décrit aux figures 2 et 3, la garniture de friction 12 et la pièce intercalaire 11 sont solidarisées par collage. La pièce intercalaire 11 est par exemple une tôle en acier.

Il est également décrit à la figure 2 une zone de progressivité dans le support 10. Cette zone de progressivité prend ici la forme d'une ailette 26. Cette ailette 26 est déformable élastiquement axialement. Cette ailette 26 est formée dans le support 10.

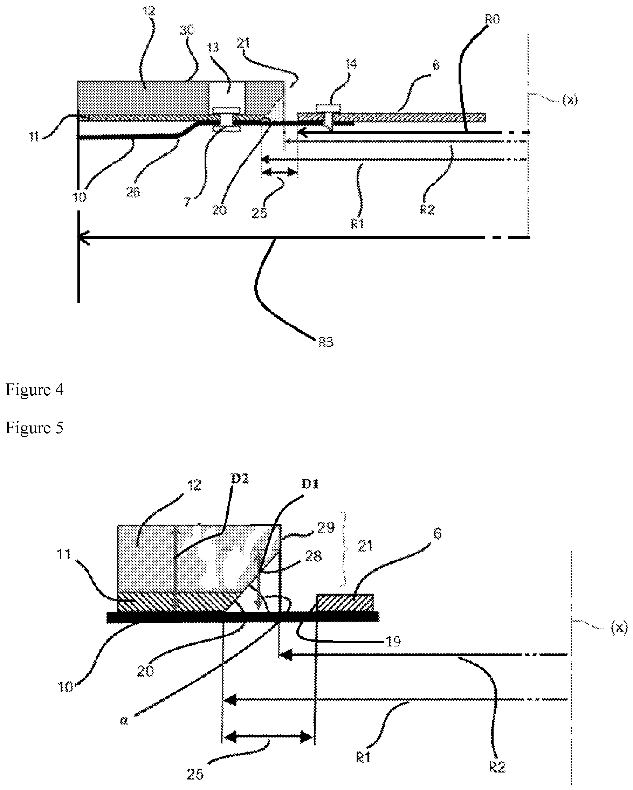

On a représenté de façon schématique à la figure 4 une partie du disque de friction 1 selon un deuxième exemple de mise en œuvre de l'invention. La figure 5 représente, en détail, une vue schématique du même disque de friction 1 représenté à la figure 4.

Ce deuxième exemple de mise en œuvre de l'invention diffère de celui qui vient d'être décrit en ce que les bords 20 et 21 présentent des géométries différentes.

En effet, le bord radialement intérieur 20 de la pièce intercalaire 11 définit ici un chanfrein, ménagé sur la totalité du bord 20.

Comme on peut le voir aux figures 4 et 5, le bord radialement intérieur 21 de la garniture de friction 12 possède une première portion 28 définissant également un chanfrein et une deuxième portion 29. La portion 29 est, dans l'exemple considéré, parallèle à l'axe de rotation X et définit la surface cylindrique de rayon R2. La portion 28 est la portion du bord radialement intérieur 21 de la garniture de friction 12 la plus proche de la pièce intercalaire 11. Le bord radialement intérieur 21 de la surface de friction 30 de la garniture de friction 12 n'est pas modifié.

Dans l'exemple considéré, le bord radialement intérieur 20 de la pièce intercalaire 11 et la portion 28 du bord radialement intérieur 21 de la garniture de friction définissent un seul et même chanfrein dont la dimension axiale D1 est comprise entre 5% et 50% de la dimension axiale D2 de l'ensemble formé par la pièce intercalaire 11 et la garniture de friction 12.

L'angle α du chanfrein, mesuré par rapport à l'axe de rotation X du moyeu 3, défini par la portion 28 du bord radialement intérieur 21 de la garniture de friction 12 est le même que l'angle du chanfrein défini par le bord radialement intérieur 20 de la pièce intercalaire 11. Ces deux chanfreins forment ainsi un seul et même chanfrein continu.

Dans l'exemple considéré, l'angle de ce seul et même chanfrein, mesuré par rapport à l'axe de rotation X du moyeu 3 est compris entre 55° et 85°. Cet angle α est choisi de manière à ne pas modifier le bord radialement intérieur de la surface de friction 30 définie par la garniture de friction 12.

Le chanfrein mentionné ci-dessus, en créant un décalage radial entre le bord radialement intérieur 20 de la partie de la pièce intercalaire 11 en contact avec le support et le rayon bord radialement intérieur 21 de la garniture de friction 12, permet d'augmenter la longueur de la portion 25 du support 10.

Dans l'exemple de mise en œuvre décrit aux figures 4 et 5, la garniture de friction 12 est surmoulée sur la pièce intercalaire 11.

L'augmentation de la longueur de la portion 25, permise selon le premier exemple de mise en œuvre de l'invention par le décalage radial entre les bords 20 et 21 et selon le deuxième exemple de mise en œuvre de l'invention par les chanfreins définis par les portions 20 et 28, est ici comprise entre 110 et 150 % de la dimension radiale égale à la différence entre le rayon R2 associé à la partie 29 du bord radialement intérieur 21 de la garniture de friction 12, et le rayon R0 du bord radialement extérieur 19 du voile 6.

L'invention n'est pas limitée à l'exemple qui vient d'être décrit.

Dans un autre exemple, le bord radialement extérieur 19 du voile 6 présente également une partie définissant un chanfrein, cette partie étant en contact avec le voile 6. Ce chanfrein additionnel permet alors d'augmenter encore la longueur de la portion 25 du support 10 radialement au-delà du voile 6 et radialement en deça de la garniture de friction 12 et sans contact avec les pièces 6 et 12.

L'expression « comprenant un » doit être comprise comme synonyme de l'expression « comprenant au moins un », sauf lorsque le contraire est spécifié.

## Revendications

1. Disque d'embrayage (1) pour embrayage à friction, comprenant :
- un moyeu (3) s'étendant selon un axe (X) longitudinal,
- un flasque (6) couplé au moyeu (3),
- un support (10) rigidement couplé au flasque (6) et s'étendant radialement au-delà du flasque (6),
- une garniture de friction (12) solidaire du support (10), et
- une pièce intercalaire (11) disposée axialement entre le support (10) et la garniture de friction (12),
la partie du bord radialement intérieur (20) de la pièce intercalaire (11) en contact avec le support (10) étant à une distance de l'axe (X) du moyeu (3) supérieure à la distance entre ledit axe (X) et le bord radialement intérieur (21) de la garniture de friction (12), une portion du support radialement en deçà, par rapport à l'axe (X), de la pièce intercalaire et radialement au-delà, par rapport à l'axe (X), du flasque n'étant en contact avec aucune de ces deux pièces, et **caractérisé en ce que** le bord radialement intérieur (20) de la pièce intercalaire (11) ayant au moins une portion se rapprochant de l'axe (X) du moyeu (3) lorsque l'on se déplace le long de ladite portion depuis le support (10) vers la garniture de friction (12).

2. Disque (1) selon la revendication 1, ladite portion du bord radialement intérieur (20) de la pièce intercalaire (11) définissant un chanfrein.

3. Disque (1) selon la revendication 1 ou 2, le bord radialement intérieur (21) de la garniture de friction (12) ayant au moins une portion (28) se rapprochant de l'axe (X) du moyeu (3) lorsque l'on se déplace le long de ladite portion (28) depuis la pièce intercalaire (11).

4. Disque (1) selon la revendication 3, ladite portion (28) du bord radialement intérieur (21) de la garniture de friction (12) définissant un chanfrein.

5. Disque (1) selon l'une quelconque des revendications précédentes, la garniture de friction (12) et la pièce intercalaire (11) étant solidarisées par collage.

6. Disque (1) selon l'une quelconque des revendications 1 à 4, la garniture de friction (12) étant surmoulée sur la pièce intercalaire (11).

7. Disque (1) selon l'une quelconque des revendications précédentes, le flasque (6) ayant un bord radialement extérieur dont au moins une portion s'éloigne de l'axe (X) du moyeu (3) lorsque l'on se déplace le long de ladite portion depuis le support (10).

8. Disque (1) selon l'une quelconque des revendications précédentes, le support (10) présentant des zones de progressivité configurées pour être élastiquement déformables axialement.

9. Disque (1) selon l'une quelconque des revendications précédentes, le flasque (6) étant solidaire en rotation du moyeu (3) et le disque (1) étant dépourvu d'amortisseur de torsion.

10. Disque (1) selon l'une quelconque des revendications 1 à 8, le flasque (6) formant le flasque d'entrée d'un amortisseur de torsion, le disque (1) comprenant en outre :
- un flasque de sortie (8) de cet amortisseur de torsion, solidaire en rotation du moyeu (3), et
- au moins un organe de rappel élastique (9) générant un effort s'opposant à la rotation du flasque d'entrée (6) de l'amortisseur par rapport au flasque de sortie (8) de l'amortisseur.

11. Disque (1) selon la revendication 10, le flasque d'entrée (6) étant l'un d'une rondelle de guidage et d'un voile de l'amortisseur.

## Patentansprüche

1. Kupplungsscheibe (1) für eine Reibungskupplung, umfassend:
- eine Nabe (3), die sich entlang einer Längsachse (X) erstreckt,
- einen Flansch (6), der an die Nabe (3) gekoppelt ist,
- einen Träger (10), der starr an den Flansch (6) gekoppelt ist und sich radial außerhalb des Flansches (6) erstreckt,
- einen Reibbelag (12), der mit dem Träger (10) fest verbunden ist, und
- ein Zwischenstück (11), das axial zwischen dem Träger (10) und dem Reibbelag (12) angeordnet ist,
wobei sich der Teil des radial inneren Randes (20) des Zwischenstücks (11), der mit dem Träger (10) in Kontakt steht, in einem Abstand von der Achse (X) der Nabe (3) befindet, der größer als der Abstand zwischen der Achse (X) und dem radial inneren Rand (21) des Reibbelags (12) ist, wobei ein Abschnitt des Trägers, der bezogen auf die Achse (X) innerhalb des Zwischenstücks und bezogen auf die Achse (X) außerhalb des Flansches liegt, mit keinem dieser beiden Teile in Kontakt ist, und **dadurch gekennzeichnet, dass** der radial innere Rand (20) des Zwischenstücks (11) mindestens einen Abschnitt besitzt, der sich der Achse (X) der Nabe (3) nähert, wenn man sich von dem Träger (10) aus entlang des Abschnitts zum Reibbelag (12) hin bewegt.

2. Scheibe (1) nach Anspruch 1, wobei der Abschnitt des radial inneren Randes (20) des Zwischenstücks (11) eine Abschrägung definiert.

3. Scheibe (1) nach Anspruch 1 oder 2, wobei der radial innere Rand (21) des Reibbelags (12) mindestens einen Abschnitt (28) besitzt, der sich der Achse (X) der Nabe (3) nähert, wenn man sich von dem Zwischenstück (11) aus entlang des Abschnitts (28) bewegt.

4. Scheibe (1) nach Anspruch 3, wobei der Abschnitt (28) des radial inneren Randes (21) des Reibbelags (12) eine Abschrägung definiert.

5. Scheibe (1) nach einem der vorhergehenden Ansprüche, wobei der Reibbelag (12) und das Zwischenstück (11) fest verklebt sind.

6. Scheibe (1) nach einem der Ansprüche 1 bis 4, wobei der Reibbelag (12) auf das Zwischenstück (11) aufgespritzt ist.

7. Scheibe (1) nach einem der vorhergehenden Ansprüche, wobei der Flansch (6) einen radial äußeren Rand besitzt, von dem mindestens ein Abschnitt sich von der Achse (X) der Nabe (3) entfernt, wenn man sich von dem Träger (10) aus entlang des Abschnitts bewegt.

8. Scheibe (1) nach einem der vorhergehenden Ansprüche, wobei der Träger (10) Belagfederbereiche aufweist, die dazu ausgestaltet sind, axial elastisch verformbar zu sein.

9. Scheibe (1) nach einem der vorhergehenden Ansprüche, wobei der Flansch (6) drehfest mit der Nabe (3) verbunden ist und die Scheibe (1) keinen Torsionsdämpfer aufweist.

10. Scheibe (1) nach einem der Ansprüche 1 bis 8, wobei der Flansch (6) den Eingangsflansch eines Torsionsdämpfers bildet, wobei die Scheibe (1) ferner umfasst:
- einen Ausgangsflansch (8) dieses Torsionsdämpfers, der drehfest mit der Nabe (3) verbunden ist, und
- mindestens ein elastisches Rückstellorgan (9), das eine Kraft erzeugt, die dem Verdrehen des Eingangsflansches (6) des Dämpfers in Bezug auf den Ausgangsflansch (8) des Dämpfers entgegenwirkt.

11. Scheibe (1) nach Anspruch 10, wobei der Eingangsflansch (6) der einer Führungsscheibe und einer Mitnehmerscheibe des Dämpfers ist.

## Claims

1. Clutch disk (1) for a friction clutch, comprising:
- a hub (3) extending along a longitudinal axis (X),
- a flange (6) coupled to the hub (3),
- a support (10) rigidly coupled to the flange (6) and extending radially beyond the flange (6),
- a friction lining (12) secured to the support (10), and
- an intermediate component (11) arranged axially between the support (10) and the friction lining (12), the part of the radially interior edge (20) of the intermediate component (11) that is in contact with the support (10) being at a distance from the axis (X) of the hub (3) that is greater than the distance between the said axis (X) and the radially interior edge (21) of the friction lining (12),
a portion of the support that is radially short, with respect to the axis (X), of the intermediate component and radially beyond, with respect to the axis (X), the flange not being in contact with either of these two components, and **characterized in that** the radially interior edge (20) of the intermediate component (11) has at least one portion that converges towards the axis (X) of the hub (3) with increasing distance along the said portion from the support (10) towards the friction lining (12).

2. Disk (1) according to Claim 1, the said portion of the radially interior edge (20) of the intermediate component (11) defining a chamfer.

3. Disk (1) according to Claim 1 or 2, the radially interior edge (21) of the friction lining (12) having at least one portion (28) that converges towards the axis (X) of the hub (3) with increasing distance along the said portion (28) from the intermediate component (11) .

4. Disk (1) according to Claim 3, the said portion (28) of the radially interior edge (21) of the friction lining (12) defining a chamfer.

5. Disk (1) according to any one of the preceding claims, the friction lining (12) and the intermediate component (11) being secured together by bonding.

6. Disk (1) according to any one of Claims 1 to 4, the friction lining (12) being overmoulded on the intermediate component (11).

7. Disk (1) according to any one of the preceding claims, the flange (6) having a radially exterior edge of which at least one portion diverges from the axis (X) of the hub (3) with increasing distance along the said portion from the support (10).

8. Disk (1) according to any one of the preceding claims, the support (10) having progressiveness zones configured to be axially elastically deformable.

9. Disk (1) according to any one of the preceding claims, the flange (6) being rotationally secured to the hub (3) and the disk (1) having no torsion damper.

10. Disk (1) according to any one of Claims 1 to 8, the flange (6) forming the input flange of a torsion damper, the disk (1) further comprising:
- an output flange (8) of this torsion damper, rotationally secured to the hub (3), and
- at least one elastic return member (9) generating a force that opposes the rotation of the input flange (6) of the damper with respect to the output flange (8) of the damper.

11. Disk (1) according to Claim 10, the input flange (6) being either a guide washer or a web of the damper.
